# EUROPEAN PATENT SPECIFICATION

(11) **EP 4 329 426 B1**
(45) Date of publication and mention of the grant of the patent: **05.11.2025**
(21) Application number: 24151712.7
(22) Date of filing: 22.03.2019
(51) Int. Cl.: B23K 13/02, H05B 6/10, H05B 6/06

(54) **INDUCTION HEATING EXTENSION CABLES INCLUDING CONTROL CONDUCTORS**
INDUKTIONSHEIZVERLÄNGERUNGSKABEL MIT STEUERLEITERN
FILS D'EXTENSION DE CHAUFFAGE PAR INDUCTION COMPRENANT DES CONDUCTEURS DE COMMANDE

(30) Priority: 22.03.2018 US 201815928272
(43) Date of publication of application: 28.02.2024
(62) Divisional of application: 19715740.7
(73) Proprietor: Illinois Tool Works Inc., Glenview IL 60025 (US)
(72) Inventor: SALSICH, Anthony V., 60025 Glenview (US); VERHAGEN, Paul, 60025 Glenview (US)
(74) Representative: HGF

(56) References cited:
- WO-A1-2016/084112
- US-A1- 2004 084 443
- US-A1- 2018 049 277

## Description

This international application claims priority to U.S. Patent Application Serial No. 15/928,272, filed March 22, 2018, entitled "INDUCTION HEATING EXTENSION CABLES INCLUDING CONTROL CONDUCTORS."

### BACKGROUND

Induction heating of workpieces to be welded, such as pipe, often involves arranging a fixture and/or one or more conductive cables in proximity to the workpiece. The power supply that provides induction heating power may be located a substantial distance from the workpiece and/or the fixture, such that measuring heating parameters directly at the power supply is not feasible.

US2018/049277A1 discloses an induction heating system according to the preamble of claim 1.

### SUMMARY

Induction heating extension cables including control conductors are disclosed, substantially as illustrated by and described in connection with at least one of the figures. The invention is an induction heating system according to claim 1.

### BRIEF DESCRIPTION OF THE DRAWINGS

FIG. 1A is a block diagram of an example induction heating system including a cable assembly constructed in accordance with aspects of this disclosure.
FIG. 1B is a block diagram of another example induction heating system, in accordance with aspects of this disclosure.
FIG. 2 is an example implementation of the cable assembly of FIGS. 1A and/or 1B.

The figures are not necessarily to scale. Where appropriate, similar or identical reference numbers are used to refer to similar or identical components.

### DETAILED DESCRIPTION

Induction heating extension cables deliver induction heating current between an induction heating power supply (e.g., a power supply producing and/or converting induction heating currents) and an induction heating cable (e.g., a cable that is positioned proximate a workpiece such that the induction heating currents induce eddy currents within the workpiece). Induction heating extension cables may have the induction heating current-carrying conductors tightly coupled to reduce (e.g., minimize or eliminate) leakage and improve efficiency.

In contrast with conventional cables, disclosed example extension cables include an additional control cable that transfers data and/or power and that is contained within the outer protective layer of the extension cable (e.g., is not exterior to the extension cable). Disclosed example extension cables couple an induction heating power supply to a remote device, which may be located near the workpiece, to exchange data with the remote device and/or provide power to the remote device. Additionally, disclosed examples may omit electrical isolation measures that may be required when the data is electrically coupled to high-power heating conductors, while being protected by the relatively tough outer jacket or protective layer of the extension cable from physical damage that may occur in a welding-type environment.

Disclosed example cable assemblies include: a first plurality of conductors in a Litz cable arrangement, an outer protective layer configured to protect the first plurality of conductors from physical damage, and a second plurality of conductors that are electrically isolated from the first plurality of conductors and are protected by the outer protective layer from physical damage.

In some example cable assemblies, the second plurality of conductors include a twisted pair of wires. In some example cable assemblies, the second plurality of conductors include coaxial conductors. Some example cable assemblies further include a coupler to couple the first plurality of conductors to an induction heating cable and to couple the second plurality of conductors to an induction heating accessory. In some such examples, the second plurality of conductors conduct at least one of power or data between the induction heating accessory and an induction heating power supply.

In some examples, the first plurality of conductors are configured to conduct induction heating current. In some examples, the first plurality of conductors have a total cross-sectional area of at least 8.37 square millimeters, exclusive of electrical insulation. Some example cable assemblies further include a coupler to couple the first plurality of conductors to an induction heating power supply and to couple the second plurality of conductors to the induction heating power supply. In some such examples, the coupler couples the first plurality of conductors to power connectors of the induction heating power supply. In some examples, the coupler couples the second plurality of conductors to a communication connector of the induction heating power supply.

Disclosed example induction heating systems include an induction heating power supply, a monitoring device remote from the induction heating power supply, and a cable assembly. The cable assembly includes a first plurality of conductors in a Litz cable arrangement, an outer protective layer configured to protect the first plurality of conductors from physical damage, and a second plurality of conductors that are electrically isolated from the first plurality of conductors and are protected by the outer protective layer from physical damage.

In some examples, the second plurality of conductors comprise a twisted pair of wires. In some examples, the second plurality of conductors comprise coaxial conductors. Some example induction heating systems further include a coupler to couple the first plurality of conductors to an induction heating cable and to couple the second plurality of conductors to the monitoring device. In some such examples, the second plurality of conductors conduct at least one of power or data between the monitoring device and the induction heating power supply.

In some example induction heating systems, the first plurality of conductors conduct induction heating current. In some examples, the first plurality of conductors have a total cross-sectional area of at least 8.37 square millimeters, exclusive of electrical insulation. Some example induction heating systems further include a coupler to couple the first plurality of conductors to the induction heating power supply and to couple the second plurality of conductors to the induction heating power supply. In some such examples, the coupler couples the first plurality of conductors to power connectors of the induction heating power supply. In some examples, the coupler couples the second plurality of conductors to a communication connector of the induction heating power supply.

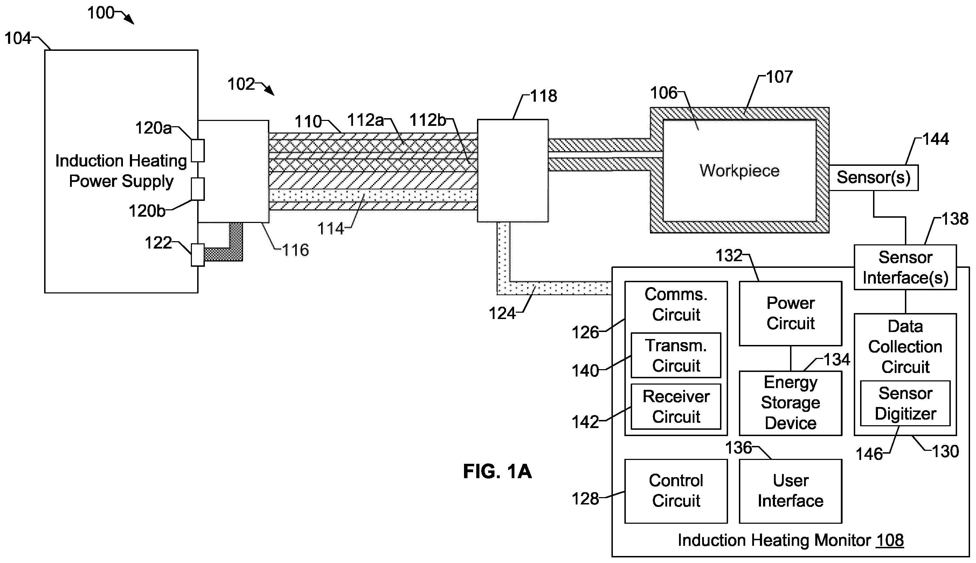

FIG. 1A is a block diagram of an example induction heating system 100 including a cable assembly 102. The heating system 100 includes an induction heating power supply 104 that provides heating power to a workpiece 106 via the cable assembly 102 and an induction heating cable 107. The system 100 further includes a induction heating monitor 108. The induction heating monitor 108 may be a monitoring device for monitoring the workpiece 106 and/or may be any other type of induction heating accessory.

The cable assembly 102 includes an outer protective layer 110, multiple conductors 112a, 112b in a Litz configuration, and a second set of two or more conductors 114. The Litz conductors 112a, 112b provide current to the heating cable 107. When the heating cable 107are arranged proximate the workpiece 106 (e.g., wrapped around the workpiece 106, attached to a fixture configured to direct the current to the workpiece 106), the power supply 104 and the heating cable 107induce Eddy currents into the workpiece 106 to inductively heat the workpiece 106. In some examples, each of the example Litz conductors 112a, 112b may have effective gauge equivalent to American Wire Gauge (AWG) 8 (e.g., a total cross-sectional area of at least 8.37 square millimeters, exclusive of the electrical insulation of the Litz conductors) or larger. In examples in which multiple Litz conductors are used to implement each of the Litz conductors 112a, 112b, the combination of Litz conductors used to implement each of the Litz conductors has an effective gauge equivalent to AWG 8 or larger (e.g., multiple conductors implementing the Litz conductor 112a have a combined total cross-sectional area of at least 8.37 square millimeters, exclusive of the electrical insulation of the Litz conductors, and multiple conductors implementing the Litz conductor 112b have a combined total cross-sectional area of at least 8.37 square millimeters). In still other examples, the combination of the Litz conductors 112a, 112b may have effective gauge equivalent to AWG 8 (e.g., each of the Litz conductors 112a, 112b may have a gauge equivalent less than AWG 8).

The second conductors 114 are contained within the outer protective layer 110 (e.g., an outer jacket) of the cable assembly 102, but is electrically isolated from the Litz conductors 112a, 112b so as to be isolated from the relatively high currents and/or voltages. The example outer protective layer 110 may be constructed using, for example, a thermoplastic polyester elastomer (e.g., Hytrel^{®}), polyurethane and/or any other material and/or combination of materials that provides mechanical and electrical protection to the Litz conductors 112a, 112b and the second conductors 114. The second conductors 114 may deliver power to the induction heating monitor 108 and/or exchange data signals between the power supply 104 and the induction heating monitor 108. Example implementations of the second conductors 114 include one or more twisted pairs of conductors or one or more coaxial cables. Other implementations may also be used.

The example cable assembly 102 of FIG. 1A further includes a power supply coupler 116 and a heating cable coupler 118. The power supply coupler 116 couples the conductors 112a, 112b to power terminals 120a, 120b (e.g., positive and negative terminals) of the induction heating power supply 104 and/or couples the second conductors 114 to a communications terminal 122 of the induction heating power supply 104. The power terminals 120a, 120b may be studs that transmit the heating power for heating the workpiece 106 via the induction heating cable 107. The example induction heating power supply 104 may exchange data and/or provide power to the induction heating monitor 108 via the communications terminal 122. In some examples, the power terminals 120a, 120b and the communications terminal 122 are integrated into the same connector, to which the power supply coupler 116 may connect.

The heating cable coupler 118 couples the conductors 112a, 112b to the induction heating cable 107. The heating cable coupler 118 also couples the conductors 114 to the induction heating monitor 108 via external conductors 124. The external conductors 124 may be of the same type as the conductors 114 within the cable assembly 102. For example, if the conductors 114 include twisted pairs of wires, the external conductors 124 may also be twisted pairs of wires. The external conductors 124 may be replaceable so that the appropriate length of external conductors 124 can be used to position the induction heating monitor 108 in a desired location.

The example induction heating monitor 108 communicates with the induction heating power supply 104 via the conductors 114 of the cable assembly 102. As mentioned above, the conductors 114 are electrically isolated from the conductors 112a, 112b that carry the induction heating power, and the conductors 114 and the conductors 112a, 112b are contained within an outer protective layer 110 of the cable assembly 102. In the example of FIG. 1A, the induction heating monitor 108 communicates and/or receives power via the conductors 114 within an extension cable. However, the conductors 114 may also be included at least partially within the heating cable 107.

The induction heating monitor 108 includes a communications circuit 126, a control circuit 128, a data collection circuit 130, a power circuit 132, an energy storage device 134, a user interface 136, and sensor interface(s) 138. The example communications circuit 126 includes a transmitter circuit 140 and a receiver circuit 142.

The example transmitter circuit 140 transmits the induction heating data to the induction heating power supply 104 via the conductors 114 via the external conductors 124 and the heating cable coupler 118. The example receiver circuit 142 may receive data from the induction heating power supply 104. The induction heating power supply 104 may include similar communication circuitry, including transmitter circuitry and/or receiver circuitry, to receive induction heating data and/or transmit configuration data to the induction heating monitor 108. In some examples, the induction heating power supply 104 modifies an induction heating output (e.g., induction heating power, etc.) based on the induction heating data received from the induction heating monitor 108 via the conductors 114.

The transmitter circuit 140 frames induction heating data for transmission via the conductors 114. The induction heating data may be generated from sensor data collected by one or more sensors 144 via the sensor interface(s) 138 and/or the data collection circuit 130. The data collection circuit 130 may include sensor digitizer(s) 146 to digitize data received from the sensor(s) 144. The induction heating data may be converted to digital data via the sensor digitizer 146 and/or input by a user or operator via the user interface 136.

The example sensor(s) 144 may include a temperature sensor (e.g., a thermocouple, a thermistor, a resistive temperature device, an infrared sensor, a semiconductor-based temperature sensor, etc.), a coolant pressure sensor, or a coolant flow sensor, and/or a location sensor. Example induction heating data includes one or more of an ambient temperature at the workpiece 106 being heated with the induction heating cable 107, a temperature of the induction heating cable 107, a temperature of a blanket in contact with the induction heating cable 107, a temperature of the workpiece 106, a measurement of current flowing through the induction heating cable 107, a voltage measurement of a voltage at the induction heating cable 107 (e.g., a voltage across the portion of the induction heating cable 107 inductively coupled to the workpiece 106), an error signal, a temperature of coolant flowing through the induction heating cable 107, a coolant pressure, a coolant flow rate, a workpiece identifier, an induction heating cable identifier, an operator identifier, date information, time information, geographic information, a cable fixture identifier, and/or any type of operator or user input entered at the induction heating monitor 108.

The power circuit 132 extracts power from the conductors 114, 124, which may be multiplexed with data signals. The power circuit 132 provides power to the data collection circuit 130, the sensors 144 (e.g., via the sensor interface(s) 138), the control circuit 128, the user interface 136, and/or the communications circuit 126. Additionally or alternatively, the power circuit may charge the energy storage device 134. The example energy storage device 134 provides power to the data collection circuit 130, the sensors 144 (e.g., via the sensor interface(s) 138), the control circuit 128, the user interface 136, and/or the communications circuit 126 when the power circuit 132 is not capable of powering the components. The example energy storage device 134 may include one or more batteries, one or more capacitors, and/or any other type of energy storage device.

The example user interface 136 may include any type(s) of user interface devices, such as selection buttons, switches, dials, number pads, touchscreens, and/or any other type of user interface device.

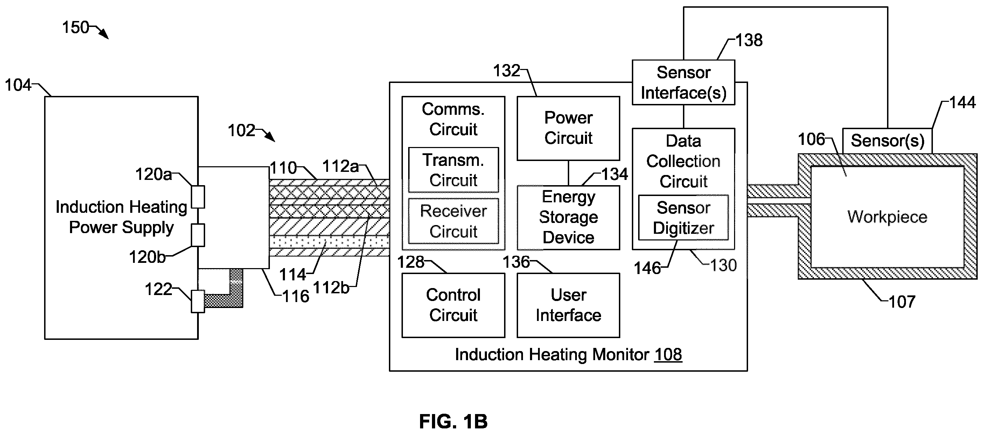

FIG. 1B is a block diagram of another example induction heating system 150. The induction heating system 150 of FIG. 1B is similar to the induction heating system 100 of FIG. 1A, and includes the cable assembly 102, the induction heating power supply 104, the workpiece 106, the induction heating cable 107, the induction heating monitor 108, the outer protective layer 110, the conductors 112a, 112b in the Litz configuration, the second set of two or more conductors 114, the power supply coupler 116, the power terminals 120a, 120b, and the communications terminal 122.

In contrast with the example system 100 of FIG. 1A, the example system 150 couples the cable assembly 102 to the induction heating monitor 108 instead of a heating cable coupler 118. The example induction heating monitor 108 receives the power and/or data via the second conductors 114 (e.g., by terminating the second conductors 114). The induction heating monitor 108 of FIG. 1B passes the heating power from the conductors 112a, 112b through to the heating cable 107. In some examples, the induction heating monitor 108 may include connectors and/or terminations for the conductors 112a, 112b and for the heating cable 107, and include passthrough conductors to connect the conductors 112a, 112b and the heating cable 107.

The example induction heating monitor 108 of FIG. 1B includes the communications circuit 126, the control circuit 128, the data collection circuit 130, the power circuit 132, the energy storage device 134, the user interface 136, and the sensor interface(s) 138. The induction heating monitor 108 collects induction heating data from one or more sensor(s) 144.

While example couplers 116, 118 are disclosed, the example cable assembly 102 may be coupled to the induction heating power supply 104, the heating cable 107, and/or the induction heating monitor 108 using any combination and/or types of couplers and/or hard wiring.

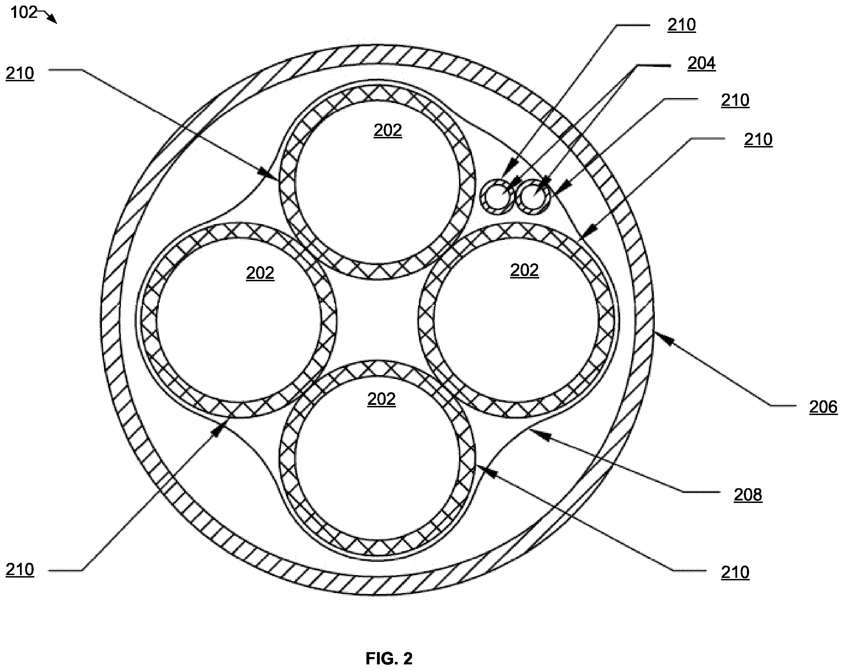

FIG. 2 is an example implementation of the cable assembly 102 of FIGS. 1A and/or 1B. The example cable assembly 102 includes four Litz wire bundles 202, two conductors 204 arranged in a twisted pair configuration, an outer jacket 206, and an internal wrap 208. Each of the Litz wire bundles 202 and the conductors 204 include an additional jacket 210, which may be constructed of a thermoplastic elastomer (TPE). The example outer jacket 206 is constructed of a thermoplastic polyester elastomer (e.g., Hytrel^{®}), polyurethane and/or any other material and/or combination of materials that provides mechanical and electrical protection to the Litz wire bundles 202 and the conductors 204. The internal wrap 208 may be constructed using polytetrafluoroethylene (PTFE) tape.

As shown in FIG. 2, the outer jacket 206 provides an outer protective layer that protects the Litz wire bundles 202 and the twisted pair conductors 204 from physical damage.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made falling within the scope of the appended claims.

## Claims

1. An induction heating system, comprising:
an induction heating power supply (104); and
a cable assembly (102), comprising:
a first plurality of conductors (112a,112b);
an outer protective layer (110) configured to protect the first plurality of conductors from physical damage; and
a monitoring device (108) coupled to the induction heating power supply;
**characterised in that**
the first plurality of conductors is in a Litz cable arrangement; and **in that**
the system comprises
a second plurality of conductors (114) that are electrically isolated from the first plurality of conductors and are protected by the outer protective layer from physical damage;
the monitoring device being coupled to the induction heating power supply via the second plurality of conductors.

2. The induction heating system as defined in claim 1, wherein the monitoring device is configured to terminate the first plurality of conductors and to couple the first plurality of conductors to an induction heating cable (107).

3. The induction heating system as defined in claim 1, wherein the monitoring device comprises:
a data collection circuit (130) configured to collect induction heating data associated with an induction heating operation performed using the induction heating power supply; and
a communication circuit (126) configured to communicate via the second plurality of conductors.

4. The induction heating system as defined in claim 3, further comprising a power circuit (132) configured to receive power via the second plurality of conductors and to provide power to the data collection circuit.

5. The induction heating system as defined in claim 3, further comprising a sensor (144), the data collection circuit comprising a sensor interface (138) configured to receive data from the sensor.

6. The induction heating system as defined in claim 5, wherein the sensor interface is configured to receive the data from at least one of a thermocouple, a thermistor, a resistance temperature detector, a semiconductor-based temperature sensor, a pressure sensor, a flow sensor, or a location sensor.

7. The induction heating system as defined in claim 3, wherein the induction heating power supply is configured to modify an induction heating output based on the induction heating data.

8. The induction heating system as defined in claim 1, further comprising a coupler (118) configured to couple the first plurality of conductors to an induction heating cable and to couple the second plurality of conductors to the monitoring device.

9. The induction heating system as defined in claim 1, wherein the first plurality of conductors is configured to conduct induction heating current.

10. The induction heating system as defined in claim **1,** wherein the second plurality of conductors comprises at least one of a twisted pair of wires or a coaxial cable.

## Patentansprüche

1. Induktionsheizsystem, aufweisend:
eine Induktionsheizstromversorgung (104); und
eine Kabelbaugruppe (102), aufweisend:
eine erste Vielzahl von Leitern (112a, 112b);
eine äußere Schutzschicht (110), die ausgebildet ist,
die erste Vielzahl von Leitern vor physischen Schäden zu schützen; und
eine Überwachungsvorrichtung (108), die mit der Induktionsheizstromversorgung gekoppelt ist;
**dadurch gekennzeichnet, dass**
die erste Vielzahl von Leitern in einer Litzenkabelanordnung ausgebildet ist; und dadurch, dass das System eine zweite Vielzahl von Leitern (114) aufweist, die elektrisch von der ersten Vielzahl von Leitern isoliert sind und durch die äußere Schutzschicht vor physischen Schäden geschützt sind;
wobei die Überwachungsvorrichtung mit der Induktionsheizstromversorgung über die zweite Vielzahl von Leitern gekoppelt ist.

2. Induktionsheizsystem nach Anspruch 1, wobei die Überwachungsvorrichtung ausgebildet ist, die erste Vielzahl von Leitern abzuschließen und die erste Vielzahl von Leitern mit einem Induktionsheizkabel (107) zu koppeln.

3. Induktionsheizsystem nach Anspruch 1, wobei die Überwachungsvorrichtung aufweist:
eine Datenerfassungsschaltung (130), die ausgebildet ist, Induktionsheizdaten zu erfassen, die mit einem Induktionsheizvorgang assoziiert sind, der unter Verwendung der Induktionsheizstromversorgung durchgeführt wird; und
eine Kommunikationsschaltung (126), die ausgebildet ist, über die zweite Vielzahl von Leitern zu kommunizieren.

4. Induktionsheizsystem nach Anspruch 3, ferner aufweisend eine Leistungsschaltung (132), die ausgebildet ist, Strom über die zweite Vielzahl von Leitern zu empfangen und Strom an die Datenerfassungsschaltung bereitzustellen.

5. Induktionsheizsystem nach Anspruch 3, ferner aufweisend einen Sensor (144), wobei die Datenerfassungsschaltung eine Sensorschnittstelle (138) aufweist, die ausgebildet ist, Daten von dem Sensor zu empfangen.

6. Induktionsheizsystem nach Anspruch 5, wobei die Sensorschnittstelle ausgebildet ist, die Daten von mindestens einem von einem Thermoelement, einem Thermistor, einem Widerstandstemperaturdetektor, einem Temperatursensor auf Halbleiterbasis, einem Drucksensor, einem Strömungssensor oder einem Ortssensor zu empfangen.

7. Induktionsheizsystem nach Anspruch 3, wobei die Induktionsheizstromversorgung ausgebildet ist, eine Induktionsheizleistung basierend auf den Induktionsheizdaten zu modifizieren.

8. Induktionsheizsystem nach Anspruch 1, ferner aufweisend einen Koppler (118), der ausgebildet ist, die erste Vielzahl von Leitern mit einem Induktionsheizkabel zu koppeln und die zweite Vielzahl von Leitern mit der Überwachungsvorrichtung zu koppeln.

9. Induktionsheizsystem nach Anspruch 1, wobei die erste Vielzahl von Leitern ausgebildet ist, Induktionsheizstrom zu leiten.

10. Induktionsheizsystem nach Anspruch 1, wobei die zweite Vielzahl von Leitern mindestens eines von einem verdrillten Paar von Drähten oder einem Koaxialkabel aufweist.

## Revendications

1. Système de chauffage par induction, comprenant :
une alimentation en puissance de chauffage par induction (104) ; et
un ensemble de câbles (102), comprenant :
une première pluralité de conducteurs (112a, 112b) ;
une couche de protection extérieure (110) configurée pour protéger la première pluralité de conducteurs d'un dommage physique ; et un dispositif de surveillance (108) couplé à l'alimentation en puissance de chauffage par induction ;
**caractérisé en ce que**
la première pluralité de conducteurs est dans un agencement de câble de Litz ; et **en ce que** le système comprend une deuxième pluralité de conducteurs (114) qui sont isolés électriquement de la première pluralité de conducteurs et sont protégés par la couche protectrice extérieure des dommages physiques ;
le dispositif de surveillance étant couplé à l'alimentation en puissance de chauffage par induction par l'intermédiaire de la deuxième pluralité de conducteurs.

2. Système de chauffage par induction selon la revendication 1, dans lequel le dispositif de surveillance est configuré pour terminer la première pluralité de conducteurs et pour coupler la première pluralité de conducteurs à un câble de chauffage par induction (107).

3. Système de chauffage par induction selon la revendication 1, dans lequel le dispositif de surveillance comprend :
un circuit de collecte de données (130) configuré pour collecter des données de chauffage par induction associées à une opération de chauffage par induction réalisée en utilisant l'alimentation en puissance de chauffage par induction ; et
un circuit de communication (126) configuré pour communiquer par l'intermédiaire de la deuxième pluralité de conducteurs

4. Système de chauffage par induction selon la revendication 3, comprenant en outre un circuit de puissance (132) configuré pour recevoir de la puissance par l'intermédiaire de la deuxième pluralité de conducteurs et pour fournir de la puissance au circuit de collecte de données.

5. Système de chauffage par induction selon la revendication 3, comprenant en outre un capteur (144), le circuit de collecte de données comprenant une interface de capteur (138) configurée pour recevoir des données provenant du capteur.

6. Système de chauffage par induction selon la revendication 5, dans lequel l'interface de capteur est configurée pour recevoir les données provenant d'au moins l'un parmi un thermocouple, une thermistance, un détecteur de température à résistance, un capteur infrarouge, un capteur de température à base de semi-conducteur, un capteur de pression, un capteur d'écoulement ou un capteur de localisation.

7. Système de chauffage par induction selon la revendication 3, dans lequel l'alimentation en puissance de chauffage par induction est configurée pour modifier une sortie de chauffage par induction sur base des données de chauffage par induction.

8. Système de chauffage par induction selon la revendication 1, comprenant en outre un coupleur (118) configuré pour coupler la première pluralité de conducteurs à un câble de chauffage par induction et pour coupler la deuxième pluralité de conducteurs au dispositif de surveillance.

9. Système de chauffage par induction selon la revendication 1, dans lequel la première pluralité de conducteurs est configurée pour conduire un courant de chauffage par induction.

10. Système de chauffage par induction selon la revendication 1, dans lequel la deuxième pluralité de conducteurs comprend au moins un parmi une paire de fils torsadée ou un câble coaxial.
